# EUROPEAN PATENT SPECIFICATION

(11) **EP 4 010 302 B1**
(45) Date of publication and mention of the grant of the patent: **21.06.2023**
(21) Application number: 20736245.0
(22) Date of filing: 09.06.2020
(51) Int. Cl.: C04B 41/68

(54) **PLASTER TREATMENT COMPOUND**
GIPSBEHANDLUNGSVERBINDUNG
COMPOSÉ DE TRAITEMENT DE PLÂTRE

(30) Priority: 06.08.2019 CZ 20190512
(43) Date of publication of application: 15.06.2022
(73) Proprietor: First Point A.S., 69501 Hodonín (CZ)
(72) Inventor: CHLANDOVÁ, Gabriela, 51724 Borohrádek (CZ); SPANIEL, Petr, 51771 Ceské Mezirící (CZ)
(74) Representative: Skoda, Milan
(86) International application number: PCT/CZ2020/000027
(87) International publication number: WO 2021/023320

(56) References cited:
- WO-A1-2013/020173
- DE-A1-102014 116 614

## Description

### Technical Field

The invention relates to a compound for the treatment of plaster, in particular to a compound for reinforcing waterproof plaster treatments containing water glass.

### State of the Art

From current technology a wide range of means for improving the surface properties of plaster are known, with their composition being related to the composition of the plasters, in particular to the type of their binders.

Acrylic plasters contain a synthetic resin binder, thanks to which the plasters are hard, tough and water-repellent. Their main disadvantage is, in addition to less resistance to dust adhesion, lower thermal stability and weak anti-fungal effects, their especially poor vapour permeability.

The binder of silicate plasters is made of potassium water glass, thanks to which they have excellent vapour permeability and can be used for all types of thermal insulation systems. Their disadvantages include less flexibility and water repellency.

in addition to these modern plasters, lime plasters are used on older and historic buildings. Their problem is gradual degradation, which can be physical (moisture changes, mechanical influences) and biological (influences of plant roots, microorganisms), but especially chemical, which consists of the decomposition of calcium carbonate as the main hardening product of lime mortars and plasters.

The reinforcement of plasters can also be carried out by painting with water glass. The disadvantage of the known solutions using water glass is that after their being used, often the surface layer of the plaster hardens and separates from the substrate.

From the patent document CZ PV 1988-8934 a facade paint is known based on acrylate and styrene acrylate, methyl-siloxane and siloxide and water glass up to 10 wt%. The fillers are limestone and pigments. This paint is not sufficiently vapour permeable due to its organic base. The paint repels water, but is not suitable for remedial treatment of older plaster.

From a further patent document CZ PV 1991-1916 is known a paint for plaster based on limestone, potassium water glass, colloidal silicon dioxide, silicones, siloxanes and pigments. This paint does not have good vapour permeability and once again is not suitable for remedial treatment of older plaster.

From patent document CZ 279049 is known a painting substance that consists of potassium water glass with a content of 5 to 15 wt% of silica, 5 to 15 wt% 50% styrene acrylate dispersion, 20 to 30 wt% of limestone, dolomite, magnesite or mixtures thereof, 10 to 20 wt% of aluminium silicates, alkali metals, alkaline soil and magnesium, 0.1 to 15 wt% of organic white and coloured pigments, and 0.2 to 1 wt% hydrophobising additives based on silanes or poly-organosiloxanes. The disadvantage of this paint is that it forms a hard layer on the plaster, which can cause destruction of the plaster.

Document DE 10 2014 116 614 A1 discloses a composition for hydrophobically treating a substrate.

From the aforementioned current technology it is clear that the main disadvantage of known current technology is that the known plaster surface treatment substances often cause destruction of the plaster surface.

The object of the invention is to provide a plaster treatment compound which stabilises and improves the long term surface properties of the plaster.

### Principle of the Invention

The above-mentioned disadvantages are largely eliminated and the objects of the invention are fulfilled by a plaster treatment compound, in particular a compound for reinforcing waterproof plaster treatments containing water glass, which according to the invention is characterised by that it consists of 20 to 69 wt% of an aqueous solution of potassium silicate, 20 to 59.9 wt% of aqueous lithium silicate solution, 10 to 20 wt% of octyltriethoxysilane solution, and 0.1 to 1 wt% water glass stabiliser. The advantage of the compound is high resistance to degradation. The compound has excellent anti-fungal effects as well, is environmentally friendly and harmless to health and reflects UV radiation well, while not releasing any organic toxic substances. To improve the hydrophobicising effects, a solution is added to the compound of octyltriethoxysilane having a silane concentration of up to 30 wt%. The advantage is that there is no reduction of vapour permeability, anti-fungal effect and thermal stability of the compound.

Preferably, the plaster treatment compound further contains 0.1 to 1 wt% of aqueous colloidal silver solution, to greatest advantage having a concentration of 100 ppm. The advantage is that it contains a solution of colloidal silver, which significantly improves the control of fungi, viruses and bacteria.

It is to advantage that the aqueous potassium silicate solution has a molar mass ratio of silica to potassium oxide in the range of 1.67 to 1.73, and has a density in the range of 1650 to 1670 kg/m³. The advantage of this composition is the excellent adhesion of the coating to the plaster and the optimisation of the chemical bonding of the compound with the plaster.

It is to further advantage that the aqueous lithium silicate solution has a molar mass ratio of silica to lithium oxide in the range of 3.8 to 4.1, and a density in the range of 1100 to 1300 kg/m³. The advantage of this compound is excellent water repellency. A further advantage is that this compound lowers the viscosity and reduces the alkalinity, which helps the compound to achieve a deeper and more effective penetration into the plaster surface. Lithium water glass is water-repellent, while covering and protecting the surface of the plaster from continuous ingress of water and filling any pores occurring in the plaster, thus preventing the transport of water and salts in it.

It is to advantage that the water glass stabilisers are hydrophilic alkoxy alkylammonium salts.

The main advantage of the plaster treatment compound according to the invention is that it simultaneously stabilises the surface of the plaster in depth and significantly improves its properties. After hardening, the surface of the plaster resembles classic glass, while being strong, hard, abrasion-resistant, and in addition to water, it is also resistant to salt solutions, oils and diesel. Another advantage is that the compound has an anti-corrosion effect on metal elements that are in contact with the plaster. The surface of the plaster is vapour-permeable, and ensures the release of water vapour, which may remain in the plaster or enter it by rising from the masonry or ground. Furthermore, abrasion of the plaster is significantly eliminated. The plaster has a smooth, glossy and washable surface. The compound is ecological and harmless to health as well.

### Examples of the Performance of the Invention

### Example 1

The compound for reinforcing waterproof plaster treatments contains 67 wt% of an aqueous solution of potassium silicate, 21 wt% of aqueous lithium silicate solution, 11 wt% of octyltriethoxysilane solution, 0.1 wt% water glass stabiliser, and 0.9 wt% aqueous colloidal silver solution with a concentration of 100 ppm.

The aqueous potassium silicate solution has a molar mass ratio of silica to potassium oxide of 1.7, and a density in the range of 1660 kg/m³.

The aqueous lithium silicate solution has a molar mass ratio of silica to lithium oxide of 4.03, and a density of 1209 kg/m³.

The water glass stabilisers are hydrophilic alkoxy alkyl-ammonium salts, in the form of a 98% aqueous solution of N,N,N',N'-Tetrakis (2-hydroxypropyl) ethylenediamine.

### Example 2

The compound for reinforcing waterproof plaster treatments contains 69 wt% of an aqueous solution of potassium silicate, 20 wt% of aqueous lithium silicate solution, 10 wt% of octyltriethoxysilane solution, and 1 wt% water glass stabiliser.

The aqueous potassium silicate solution has a molar mass ratio of silica to potassium oxide of 1.67, and a density in the range of 1650 kg/m³.

The aqueous lithium silicate solution has a molar mass ratio of silica to lithium oxide of 3.8, and a density of 1100 kg/m³.

The water glass stabilisers are hydrophilic alkoxy alkyl-ammonium salts, in the form of a 98% aqueous solution of N, N, N ', N'-Tetrakis (2-hydroxypropyl) ethylenediamine.

### Example 3

The compound for reinforcing waterproof plaster treatments contains 68 wt% of an aqueous solution of potassium silicate, 20 wt% of aqueous lithium silicate solution, 10 wt% of octyltriethoxysilane solution, 1 wt% water glass stabiliser, and 1 wt% aqueous colloidal silver solution with a concentration of 100 ppm.

The aqueous potassium silicate solution has a molar mass ratio of silica to potassium oxide of 1.73, and a density in the range of 1670 kg/m³.

The aqueous lithium silicate solution has a molar mass ratio of silica to lithium oxide of 4.1, and a density of 1300 kg/m³.

The water glass stabilisers are hydrophilic alkoxy alkyl-ammonium salts, in the form of a 98% aqueous solution of N,N,N',N'-Tetrakis (2-hydroxypropyl) ethylenediamine.

### Example 4

The compound for reinforcing waterproof plaster treatments contains 69 wt% of an aqueous solution of potassium silicate, 20 wt% of aqueous lithium silicate solution, 10 wt% of octyltriethoxysilane solution, and 1 wt% water glass stabiliser.

The aqueous potassium silicate solution has a molar mass ratio of silica to potassium oxide of 1.69, and a density in the range of 1655 kg/m³.

The aqueous lithium silicate solution has a molar mass ratio of silica to lithium oxide of 4.05, and a density of 1250 kg/m³.

The water glass stabilisers are hydrophilic alkoxy alkyl-ammonium salts, in the form of a 98% aqueous solution of N,N,N',N'-Tetrakis (2-hydroxypropyl) ethylenediamine.

### Example 5

The compound for reinforcing waterproof plaster treatments contains 20 wt% of aqueous potassium silicate solution, 59.8 wt% of aqueous lithium silicate solution, 20 wt% of octyltriethoxysilane solution, 0.1 wt% water glass stabiliser, and 0.1 wt% aqueous colloidal silver solution with a concentration of 100 ppm.

The aqueous potassium silicate solution has a molar mass ratio of silica to potassium oxide of 1.69, and a density in the range of 1660 kg/m³.

The aqueous lithium silicate solution has a molar mass ratio of silica to lithium oxide of 4.01, and a density of 1150 kg/m³.

The water glass stabilisers are hydrophilic alkoxy alkyl-ammonium salts, in the form of a 98% aqueous solution of N,N,N',N'-Tetrakis (2-hydroxypropyl) ethylenediamine.

### Example 6

The compound for reinforcing waterproof plaster treatments contains 20 wt% of aqueous potassium silicate solution, 59.9 wt% of aqueous lithium silicate solution, 20 wt% of octyltriethoxysilane solution, and 0.1 wt% water glass stabiliser.

The aqueous potassium silicate solution has a molar mass ratio of silica to potassium oxide of 1.68, and a density in the range of 1662 kg/m³.

The aqueous lithium silicate solution has a molar mass ratio of silica to lithium oxide of 4.03, and a density of 1211 kg/m³.

The water glass stabilisers are hydrophilic alkoxy alkyl-ammonium salts, in the form of a 98% aqueous solution of N,N,N',N'-Tetrakis (2-hydroxypropyl) ethylenediamine.

### Industrial Application

The plaster treatment compound according to the invention can be used for the surface treatment of plaster, in particular for the renovation of old plaster and for the renovation of plaster on damp walls.

## Claims

1. A plaster treatment compound, in particular a compound for reinforcing waterproof plaster treatments containing water glass, **characterized in that** it contains 20 to 69 wt% of an aqueous solution of potassium silicate, 20 to 59.9 wt% of aqueous lithium silicate solution, 10 to 20 wt% of octyltriethoxysilane solution, and 0.1 to 1 wt% water glass stabiliser.

2. The plaster treatment compound according to claim 1, **characterized in that** it further comprises 0.1 to 1 wt% aqueous colloidal silver solution.

3. The plaster treatment compound according to claim 2, **characterized in that** the aqueous colloidal silver solution has a concentration of 100 ppm.

4. The plaster treatment compound according to any one of the preceding claims, **characterized in that** the aqueous potassium silicate solution has a molar mass ratio of silica to potassium oxide in the range from 1.67 to 1.73.

5. The plaster treatment compound according to one of the preceding claims, **characterized in that** the aqueous potassium silicate solution has a density in the range from 1650 to 1670 kg/m³.

6. The plaster treatment compound according to any one of the preceding claims, **characterized in that** the aqueous lithium silicate solution has a molar mass ratio of silica to lithium oxide in the range from 3.8 to 4.1.

7. The plaster treatment compound according to any one of the preceding claims, **characterized in that** the aqueous lithium silicate solution has a density in the range from 1100 to 1300 kg/m³.

8. The plaster treatment compound according to any one of the preceding claims, **characterized in that** the water glass stabilisers are hydrophilic alkoxy alkyl-ammonium salts.

## Patentansprüche

1. Gemisch für die Putzbehandlung, insbesondere Gemisch für die festigende wasserbeständige Putzbehandlung, das Wasserglas enthält, **dadurch gekennzeichnet, dass** es 20 bis 69 Volumenprozent der wässrigen Lösung des Kaliumsilicats, 20 bis 59,9 Volumenprozent der wässrigen Lösung des Lithiumsilicats, 10 bis 20 Volumenprozent der Octyltriethoxysilanlösung und 0,1 bis 1 Volumenprozent eines Wasserglasstabilisators enthält.

2. Gemisch für die Putzbehandlung, gemäß Anspruch 1, **dadurch gekennzeichnet, dass** es des Weiteren 0,1 bis 1 Volumenprozent der wässrigen kolloidalen Silberlösung enthält.

3. Gemisch für die Putzbehandlung, gemäß Anspruch 2, **dadurch gekennzeichnet, dass** die wässrige kolloidale Silberlösung die Konzentration von 100 ppm hat.

4. Gemisch für die Putzbehandlung, gemäß einem der vorstehenden Ansprüche, **dadurch gekennzeichnet, dass** die wässrige Lösung des Kaliumsilicats das Verhältnis der Molekülmassen des Siliciumdioxids und des Kaliumoxids im Bereich 1,67 bis 1,73 hat.

5. Gemisch für die Putzbehandlung, gemäß einem der vorstehenden Ansprüche, **dadurch gekennzeichnet, dass** die wässrige Lösung des Kaliumsilicats die Dichte im Bereich 1650 bis 1670 kg/m³ hat.

6. Gemisch für die Putzbehandlung, gemäß einem der vorstehenden Ansprüche, **dadurch gekennzeichnet, dass** die wässrige Lösung des Lithiumsilicats das Verhältnis der Molekülmassen des Siliciumdioxids und des Lithiumoxids im Bereich 3,8 bis 4,1 hat.

7. Gemisch für die Putzbehandlung, gemäß einem der vorstehenden Ansprüche, **dadurch gekennzeichnet, dass** die wässrige Lösung des Lithiumsilicats die Dichte im Bereich 1100 bis 1300 kg/m³ hat.

8. Gemisch für die Putzbehandlung, gemäß einem der vorstehenden Ansprüche, **dadurch gekennzeichnet, dass** der Wasserglasstabilisator hydrophile alkoxyle Alkylamoniumsalze sind.

## Revendications

1. Composé pour le traitement des enduits, en particulier composé pour le traitement de renforcement résistant à l'eau des enduits contenant du verre liquide, **caractérisé en ce qu'**il contient 20 à 69 % en poids d'une solution aqueuse de silicate de potassium, 20 à 59,9 % en poids d'une solution aqueuse de silicate de lithium, 10 à 20 % en poids d'une solution d'octyltriethoxysilane, et 0,1 à 1 % en poids de stabilisateur de verre liquide.

2. Composé pour le traitement des enduits selon la revendication 1, **caractérisé en ce qu'**il comporte en outre 0,1 à 1 % en poids d'une solution aqueuse d'argent colloïdal.

3. Composé pour le traitement des enduits selon la revendication 2, **caractérisé en ce que** la solution aqueuse d'argent colloïdal a une concentration de 100 ppm.

4. Composé pour le traitement des enduits selon l'une quelconque des revendications précédentes, **caractérisé en ce que** la solution aqueuse de silicate de potassium présente un rapport de masse molaire entre la silice et l'oxyde de potassium compris entre 1,67 et 1,73.

5. Composé pour le traitement des enduits selon l'une quelconque des revendications précédentes, **caractérisé en ce que** la solution aqueuse de silicate de potassium a une densité comprise entre 1650 et 1670 kg/m³.

6. Composé pour le traitement des enduits selon l'une quelconque des revendications précédentes, **caractérisé en ce que** la solution aqueuse de silicate de lithium présente un rapport de masse molaire entre la silice et l'oxyde de lithium compris entre 3,8 et 4,1.

7. Composé pour le traitement des enduits selon l'une quelconque des revendications précédentes, **caractérisé en ce que** la solution aqueuse de silicate de lithium a une densité comprise entre 1100 et 1300 kg/m³.

8. Composé pour le traitement des enduits selon l'une quelconque des revendications précédentes, **caractérisé en ce que** les stabilisateurs du verre liquide sont des sels d'alkoxyl alkylammonium hydrophiles.
